# EUROPÄISCHE PATENTANMELDUNG

(11) **EP 1 865 462 A1**
(43) Veröffentlichungstag der Anmeldung: **12.12.2007**
(21) Anmeldenummer: 07106824.1
(22) Anmeldetag: 24.04.2007
(51) Int. Cl.: G06T 5/00

(54) **Verfahren zur Binarisierung eines digitalen Grauwertbildes**

(30) Priorität: 09.06.2006 DE 102006026842
(71) Anmelder: Carl Zeiss NTS GmbH, 73447 Oberkochen (DE)
(72) Erfinder: Albiez, Michael, 73431 Aalen (DE)
(74) Vertreter: Gnatzig, Klaus

(57) **Zusammenfassung**

Die Erfindung betrifft ein Verfahren zur Bearbeitung eines digitalen Grauwertbildes, wobei von dem Grauwertbild ein binäres Kantenbild so erzeugt wird, dass im Grauwertbild vorhandene Kanten als Kantenzugbereiche ermittelt werden, und anschließend ein Mittelwert von Grauwerten des Grauwertbildes in allen Kantenzugbereichen des binären Kantenbildes berechnet wird, wobei der Mittelwert einen Schwellwert für die Erzeugung eines binarisierten Grauwertbildes darstellt.

## Beschreibung

Die Erfindung betrifft ein Verfahren zur Binarisierung eines digitalen Grauwertbildes. Die Erfindung betrifft ferner ein Computersystem und ein Computerprogramm zur Durchführung eines solchen Verfahrens sowie eine Bildaufnahmevorrichtung mit einem derartigen Computerprogramm.

Ein digital aufgenommenes Bild kann dazu verwendet werden, Informationen in dem Bild durch eine Bildverarbeitung zu ermitteln. Eine häufige Anwendung ist das Bestimmen von Eigenschaften von Objekten, die in dem Bild enthalten sind. Solche Eigenschaften können zum Beispiel Größe, Lage, Schwerpunkt, Umfang oder Rundheit mindestens eines Objektes in einem begrenzten Bildbereich oder im gesamten Bild sein. Eine andere Anwendung besteht darin, an Hand eines Grauwertbildes eine maximale Auflösung der Aufnahmevorrichtung zu bestimmen, mit dem das Grauwertbild aufgenommen wurde. Um derartige Analysen durchzuführen, ist es vorteilhaft, wenn die Objekte vom Hintergrund eindeutig getrennt bzw. segmentiert werden. Dieser Vorgang erfordert das Festsetzen einer Grenze oder eines Schwellwertes, so dass jeder Grauwertbildpunkt, der diesen Wert überschreitet oder unterschreitet, in einem neuen Bild entweder als weißer oder schwarzer Punkt gesetzt wird. Bei einem solchen Schwellwertverfahren wird somit das Ausgangsbild "binarisiert", es werden also genau zwei Segmente in Form eines Hintergrundes und eines Objektes gebildet.

Im Stand der Technik sind viele Verfahren bekannt, um ein Grauwertbild durch Zuordnung eines geeigneten Schwellwertes zu binarisieren. Eine Übersicht gibt zum Beispiel Sahoo P. K. et al., "A Survey of Thresholding Techniques", Computer Vision, Graphics and Image Processing 41, 233-260 (1988). Einige der dort vorgestellten Verfahren sind mit dem Nachteil verbunden, dass während eines Zwischenschrittes eine subjektive Bewertung durch einen Anwender erforderlich ist, so dass keine objektive Bildauswertung erreicht wird. Bei Verfahren, die einen Schwellwert vollständig automatisiert ermitteln, besteht ein Nachteil darin, dass die durch die unterschiedlichen Verfahren erzielten Ergebnisse einer Binarisierung sehr stark voneinander abweichen, wie dies aus Tabelle 1 in dem oben erwähnten Artikel zu erkennen ist. Bei einigen Verfahren sind wichtige Bilddetails nach der Binarisierung nicht mehr vorhanden, bei anderen Verfahren werden Details hinzugefügt, die ursprünglich nicht aufgenommen worden waren. Ein Anwender müsste somit sehr genaue Kenntnisse besitzen, welches Verfahren für welche Art von Grauwertbild am Besten geeignet ist. Außerdem müsste der Anwender vorher entscheiden, welche Bildinformation von Bedeutung ist, um ein geeignetes Bildverarbeitungsverfahren auszuwählen. Um ein gutes Binarisierungsergebnis zu erhalten, wären somit vor der Anwendung eines Bildverarbeitungsverfahrens subjektive Bewertungen erforderlich. Da zudem eine relativ geringe Wahrscheinlichkeit besteht, dass das "richtige" Verfahren zum Einsatz kommt, müssen zur Sicherheit mehrere Verfahren angewendet und die Binarisierungs-Ergebnisse miteinander verglichen werden. Ein solches Vorgehen ist mit einem hohen Zeitaufwand verbunden.

Es ist daher eine Aufgabe der Erfindung, ein Verfahren anzugeben, mit dem von einem ursprünglich aufgenommenen Grauwertbild ohne Verlust von Bilddetails und ohne Hinzufügen von ursprünglich nicht vorhandenen Details eine möglichst wahrheitsgetreue Wiedergabe des Grauwertbildes in binarisierter Form in kurzer Zeit erreicht werden kann, wobei ein Anwender keine Detailkenntnisse von Bildverarbeitungsverfahren besitzen muss und subjektive Bewertungen vor und während der Durchführung eines Bildverarbeitungsverfahrens nicht erforderlich sind.

Diese Aufgabe wird durch ein Verfahren mit den Merkmalen des Anspruchs 1, durch Computerprogramme mit den Merkmalen der Ansprüche 9 und 10, durch ein Computersystem mit den Merkmalen des Anspruchs 11 und durch eine Bildaufnahmevorrichtung mit den Merkmalen des Anspruchs 12 gelöst. Vorteilhafte Ausführungsformen der Erfindung ergeben sich aus den Merkmalen der abhängigen Ansprüche.

Bei dem erfindungsgemäßen Verfahren gemäß Anspruch 1 wird von einem aufgenommenen Grauwertbild ein binäres Kantenbild so erzeugt, dass im Grauwertbild vorhandene Kanten als Kantenzugbereiche ermittelt werden. Anschließend wird ein Mittelwert von Grauwerten des Grauwertbildes in allen Kantenzugbereichen des binären Kantenbildes berechnet, wobei der Mittelwert einen Schwellwert für die Erzeugung eines binarisierten Grauwertbildes darstellt. Ein Vorteil dieses Verfahrens liegt darin, dass es somit nicht erforderlich ist, für das Grauwertbild ein Histogramm mit einer Häufigkeitsverteilung von Grauwerten in dem Grauwertbild aufzunehmen und daraus einen Schwellwert für die Binarisierung zu ermitteln.

Gemäß einer Ausführungsform der Erfindung wird das binäre Kantenbild mittels eines auf Basis des Grauwertbildes erzeugten Gradientenbildes geschaffen, wobei für das Erzeugen des Gradientenbildes vorzugsweise ein Differenzenoperator zum Einsatz kommt, welcher aus der Gruppe ausgewählt ist, welche einen Sabel-Operator, Prewitt-Operator, Laplace-Operator, Kirsch-Operator und Roberts-Operator aufweist. Es können auch andere Differenzenoperatoren zum Einsatz kommen, wenn sich damit ein Gradientenbild erzeugen lässt. Vorzugsweise wird das Grauwertbild vor dem Erzeugen des Gradientenbildes einem Glättungsverfahren unterzogen. Dies kann zum Beispiel durch den Einsatz eines Medianfilters geschehen. Ein derartiges Glättungsverfahren dient dazu, die Rauschintensität im ursprünglich aufgenommenen Grauwertbild zu verringern.

Gemäß einer bevorzugten Ausführungsform der Erfindung wird das Gradientenbild durch Verknüpfen eines ersten Richtungs-Gradientenbildes mit einem zweiten Richtungs-Gradientenbild erzeugt, wobei das erste Richtungs-Gradientenbild geschaffen wird, indem Gradienten im Grauwertbild in einer ersten Richtung ermittelt werden, und das zweite Richtungs-Gradientenbild geschaffen wird, indem Gradienten im Grauwertbild in einer zur ersten Richtung senkrechten Richtung ermittelt werden. Eine solche Vorgehensweise bietet sich zum Beispiel beim Einsatz eines Sobel-Operators an. Durch eine derartige Gradientenbestimmung lässt sich die Richtung der Gradienten an zu identifizierenden Kanten erkennen. Dies ist vorteilhaft, da somit Kantenzugbereiche mit geschlossenen Pfaden ermittelt werden können. Sind derartige Pfade ermittelt, kann sofort der Schwellwert für die Binarisierung als Mittelwert von Grauwerten des Grauwertbildes in den Kantenzugbereichen berechnet werden.

Wird nicht nach geschlossenen Pfaden gesucht, so dass sich zum Beispiel auch Halbkreise ermitteln lassen, kann dem Gradientenbild ein erster zusätzlicher Schwellwert zugeordnet werden, wobei Gradientenbildpunkte mit einem Helligkeitsbetrag oberhalb des ersten zusätzlichen Schwellwertes auf logisch 1 gesetzt und unterhalb des ersten zusätzlichen Schwellwertes auf logisch 0 gesetzt werden, so dass ein binäres Kantenbild geschaffen wird, in welchem die auf logisch 1 gesetzten Gradientenbildpunkte Kantenzugbereiche bilden und die auf logisch 0 gesetzten Gradientenbildpunkte einen Hintergrund bilden. Damit wird ein binäres Kantenbild mit Kantenzugbereichen vor schwarzem Hintergrund erstellt. Der erste zusätzliche Schwellwert beträgt vorzugsweise ein Viertel des maximalen Gradienten im Gradientenbild. Ein solcher relativ kleiner Schwellwert ist vorteilhaft, da somit nur relativ wenig Bildinformation aus dem noch als Grauwertbild vorliegenden Gradientenbild ausgeblendet wird.

Falls eine weitere Reduzierung von Rauschsignalen erwünscht ist, kann das binäre Kantenbild einem Glättungsverfahren unterzogen werden, so dass ein geglättetes binäres Kantenbild erzeugt wird. Anschließend wird ein zweiter zusätzlicher Schwellwert festgesetzt, wobei Bildpunkte mit einem Helligkeitsbetrag oberhalb des zweiten zusätzlichen Schwellwertes auf logisch 1 gesetzt werden, und Bildpunkte mit einem Helligkeitsbetrag unterhalb des zweiten zusätzlichen Schwellwertes auf logisch 0 gesetzt werden, wobei die auf logisch 1 gesetzten Kantenbildpunkte Kantenzugbereiche bilden und die auf logisch 0 gesetzten Kantenbildpunkte einen Hintergrund bilden, um ein zusätzliches binäres Kantenbild zu erzeugen. Vorzugsweise beträgt der zweite zusätzliche Schwellwert die Hälfte des maximalen Gradienten in dem geglätteten binären Kantenbild. Da die Basis ein Binärbild ist, kann dieser relativ hohe Schwellwert verwendet werden, ohne wichtige Bildinformation auszublenden.

Vorteile und Weiterbildungen der Erfindung werden an Hand der nachfolgenden Figuren erläutert, in welchen zeigen:
- Fig. 1: ein aufgenommenes digitales Grauwertbild, das binarisiert werden soll;
- Fig. 2: ein zu Fig. 1 zugehöriges Histogramm;
- Fig. 3: ein mit Hilfe des Histogramms aus Fig. 2 ermitteltes binarisiertes Bild;
- Fig. 4: ein geglättetes Grauwertbild;
- Fig. 5: ein erstes Richtungs-Gradientenbild auf der Basis des geglätteten Grauwertbildes von Fig. 4;
- Fig. 6: ein zweites Richtungs-Gradientenbild auf der Basis des geglätteten Grauwertbildes von Fig. 4;
- Fig. 7: ein Gradientenbild aus der Verknüpfung des ersten und des zweiten Richtungs- Gradientenbildes gemäß Fig. 5 und Fig. 6;
- Fig. 8: ein binäres Kantenbild mit Kantenzugbereichen auf der Basis des Gradientenbildes von Fig. 7;
- Fig. 9: ein geglättetes binäres Kantenbild auf der Basis des binären Kantenbildes von Fig. 8;
- Fig. 10: ein zusätzliches binäres Kantenbild mit Kantenzugbereichen auf der Basis des Bildes von Fig. 9;
- Fig. 11: eine Überlagerung des ursprünglichen Grauwertbildes gemäß Fig. 1 mit dem zusätzlichen binären Kantenbild gemäß Fig. 10;
- Fig. 12: ein binarisiertes Kantenbild auf der Basis von Fig. 11;

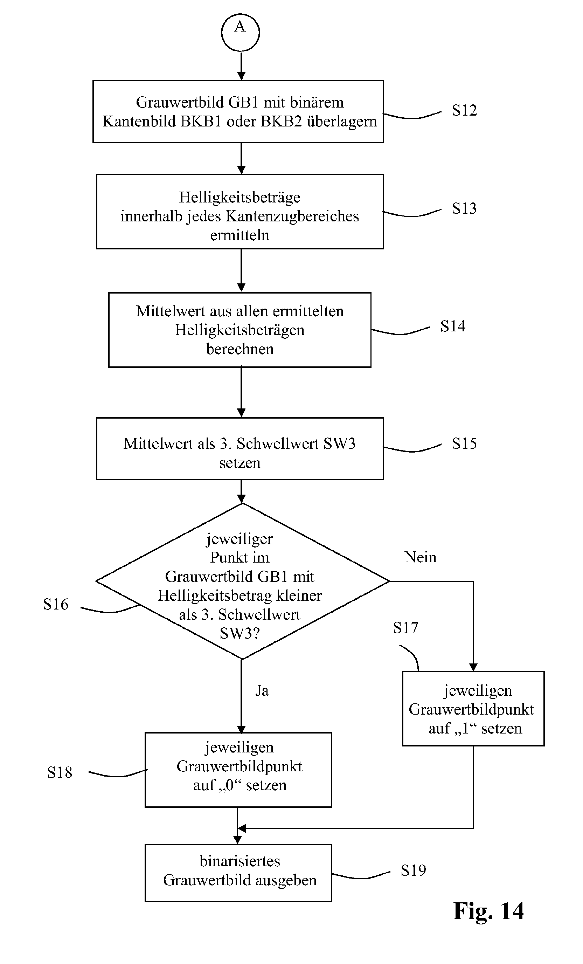

- Fig. 13 und Fig. 14: jeweils ein Flussdiagramm mit den wichtigsten Schritten des Verfahrens; und
- Fig. 15: eine schematische Querschnittsansicht eines Elektronenmikroskops mit einem Monitor.

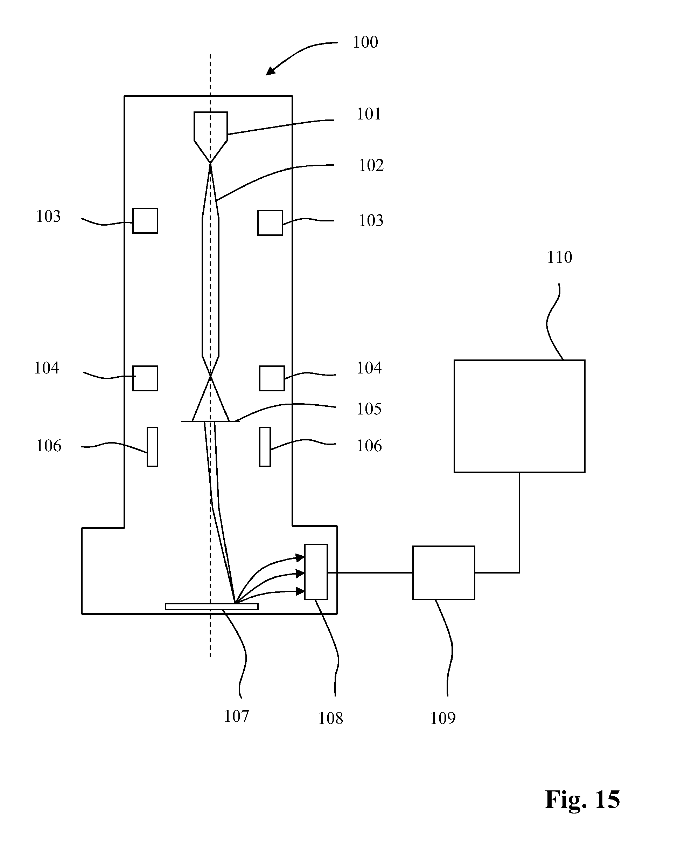

In Fig. 15 ist ein Rasterelektronenmikroskop 100 mit einem Monitor 110 dargestellt, welcher ein Grauwertbild anzeigen kann. Das Rasterelektronenmikroskop 100 weist eine Elektronenquelle 101 auf, welche einen Elektronenstrahl 102 aussendet, der von elektromagnetischen Linsen 103 und 104 gebündelt wird. Nach dem Passieren einer Aperturblende 105 wird der Elektronenstrahl von Ablenkspulen 106 auf eine zu untersuchende Probe 107 gelenkt und zeilenförmig über die Oberfläche der Probe gerastert. Beim Auftreffen des Elektronenstrahls auf die Probe werden unter anderem Sekundärelektronen frei, die von einem Detektor 108 erfasst werden. Dessen Signale werden zu einem nachgeschalteten Verstärker 109 geleitet, an den der Monitor 110 gekoppelt ist, mit welchem sich ein Grauwertbild anzeigen lässt.

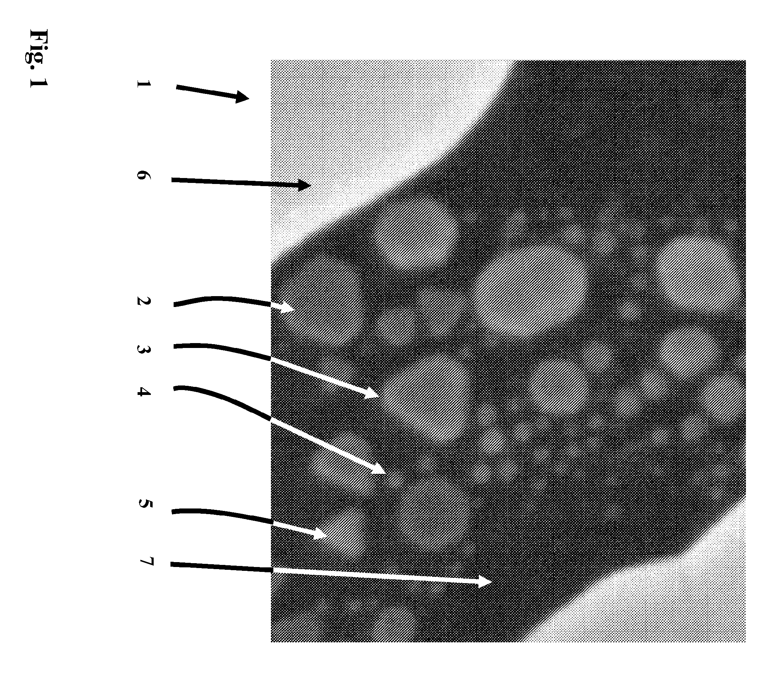

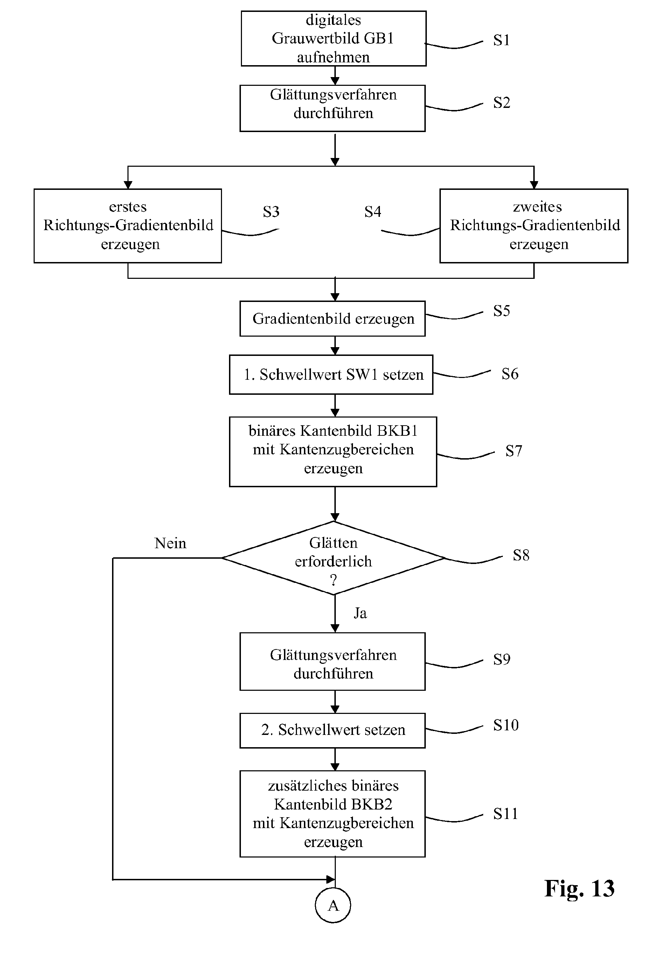

In Fig. 1 ist ein mit einem Rasterelektronenmikroskop aufgenommenes digitales Grauwertbild 1 (Schritt S1, vgl. Flussdiagramm in Fig. 13) dargestellt. Es weist in unterschiedlichen Grautönen relativ helle kreisförmige und vieleckige Objekte 2, 3, 4 in unterschiedlicher Größe vor einem dunkler erscheinenden Hintergrund 7 auf. Teilweise besitzen die Objekte im Vergleich zu ihrem Zentrum einen helleren Randbereich 5, so dass sie sich vor dem dunkleren Hintergrund 7 für das menschliche Auge gut unterscheiden lassen. In der Aufnahme sind ferner im Vergleich zu den Objekten 2, 3 und 4 relativ helle Bereiche 6 erkennbar, die eine große Bildfläche einnehmen.

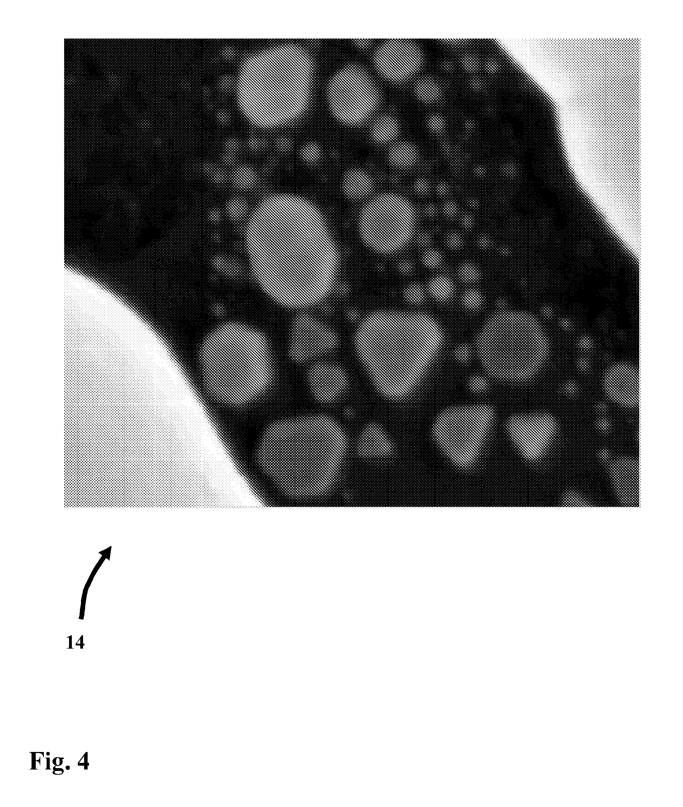

Die Bildverarbeitung erfolgt nach einer Ausführungsform des erfindungsgemäßen Verfahrens derart, dass in einem Schritt S2 dieses Grauwertbild einem Glättungsverfahren unterzogen wird, so dass ein geglättetes Grauwertbild 14 vorliegt, siehe Fig. 4. Dazu kann zum Beispiel ein 3x3-Medianfilter verwendet werden. Das geglättete Grauwertbild 14 zeigt im Vergleich zum Grauwertbild 1 verringerte Rauschsignale.

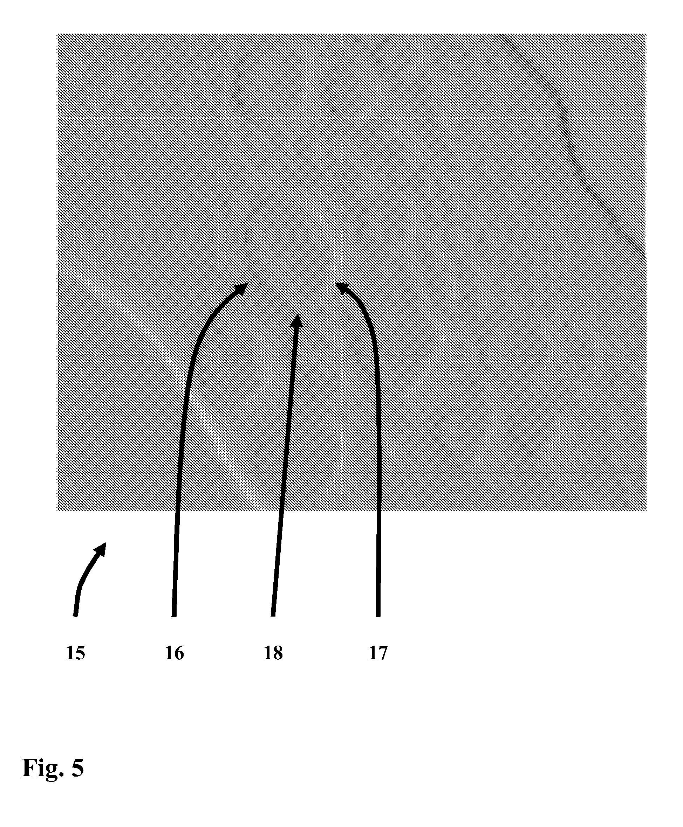

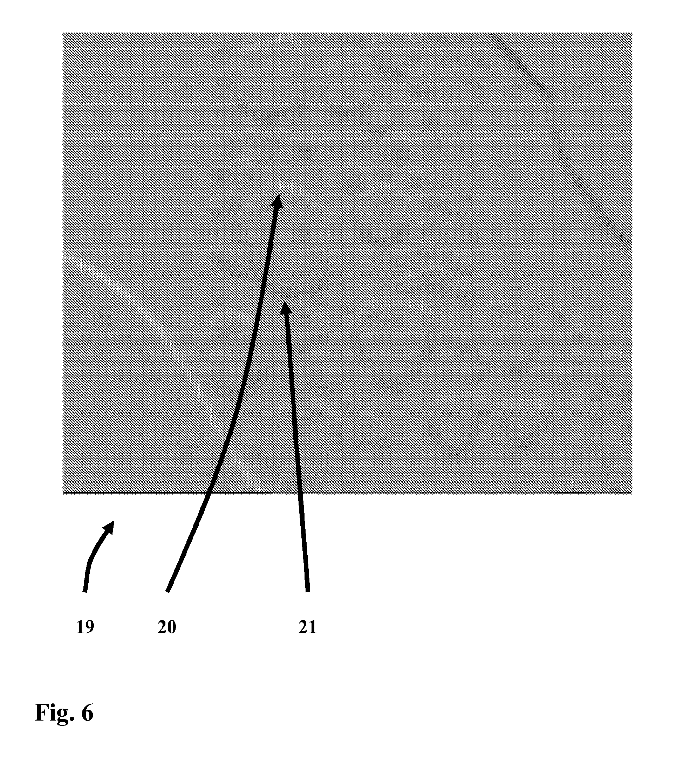

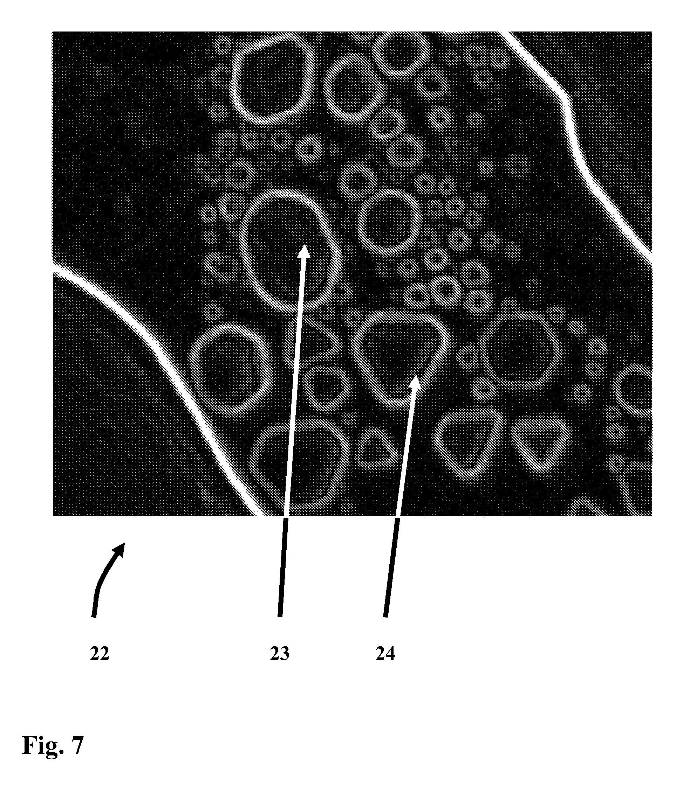

Anschließend kann in einem Schritt S3 ein erstes Richtungs-Gradientenbild erzeugt werden. Bei dem in Fig. 5 dargestellten ersten Richtungs-Gradientenbild 15 wurde basierend auf dem geglätteten Grauwertbild 14 für jede Punktzeile ein Gradient in Zeilenrichtung ermittelt. An Kanten, welche in Zeilenrichtung vorliegen, ergeben sich somit dunklere oder hellere Linien, siehe Bezugszeichen 16 und 17 in Fig. 5. Ist beim Abtasten in Zeilenrichtung (x-Richtung) kein Gradient zu erkennen, erscheint ein durchschnittlicher Grauwert, der sich nicht durch eine hellere oder dunklere Linie von der Umgebung abhebt, siehe Bezugszeichen 18. In einem weiteren Schritt S4 wird auf der Basis des geglätteten Grauwertbildes 14 dieses Vorgehen zum Ermitteln eines Gradienten auch in Spaltenrichtung (y-Richtung) durchgeführt. Fig. 6 zeigt ein zweites Richtungs-Gradientenbild 19, wobei für jede Punktspalte ein Gradient in Spaltenrichtung ermittelt wurde. Aus Fig. 6 ist erkennbar, dass sich in Spaltenrichtung zum Beispiel eine hellere Linie 20 und dunklere Linie 21 am Rande einer Objektkante ergibt. Werden die beiden Richtungs-Gradientenbilder 15 und 19 miteinander verknüpft (Schritt S5), zum Beispiel durch Quadrieren des jeweiligen Grauwertes jedes Bildpunktes des ersten Richtungs-Gradientenbildes 15 und des zweiten Richtungs-Gradientenbildes 19 und anschließendes Addieren der Quadrate für jeden Bildpunkt, ergibt sich das in Fig. 7 dargestellte Gradientenbild 22. Von den vorhandenen Objekten sind nun vorrangig die Umrisse im Bereich ihrer Kanten zu erkennen. Zusätzlich sind innerhalb der Objekte etwas dunklere Bereiche 23, 24 vor noch dunklerem Hintergrund sichtbar.

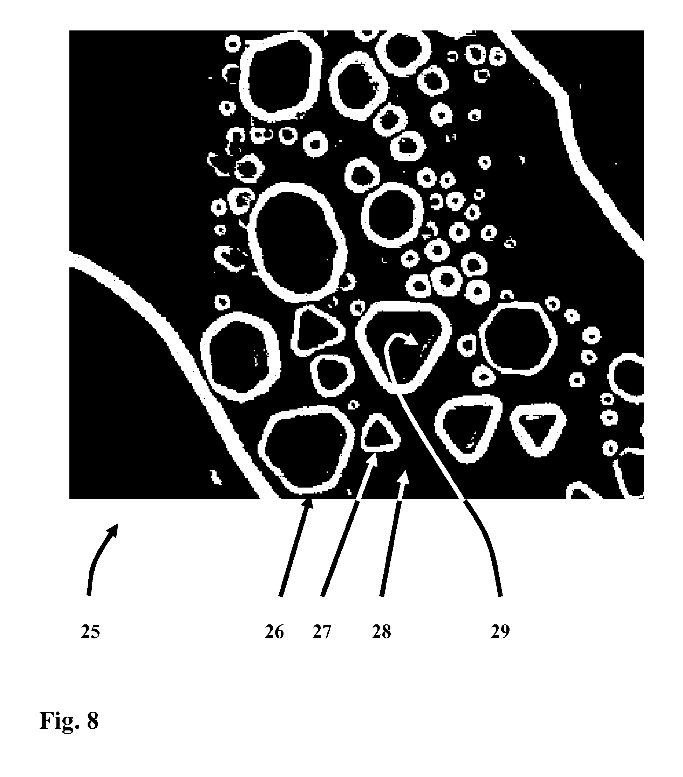

In einem Schritt S6 wird ein erster Schwellwert SW1 festgesetzt, z.B. ein Viertel des maximalen Gradienten im Gradientenbild 22. Gradientenbildpunkte mit einem Helligkeitsbetrag oberhalb des ersten Schwellwertes werden in einem neu zu erstellenden Bild auf logisch 1 gesetzt, wobei Gradientenbildpunkte mit einem Helligkeitsbetrag unterhalb des ersten Schwellwertes SW1 auf logisch 0 gesetzt werden (Schritt S8). Damit wird ein binäres Kantenbild 25 geschaffen, siehe Fig. 8, in welchem die auf logisch 1 gesetzten Bildpunkte Kantenzugbereiche, siehe z.B. Bezugszeichen 26 und 27, bilden, und die auf logisch 0 gesetzten Bildpunkte einen Hintergrund, siehe z.B. Bezugszeichen 28, bilden.

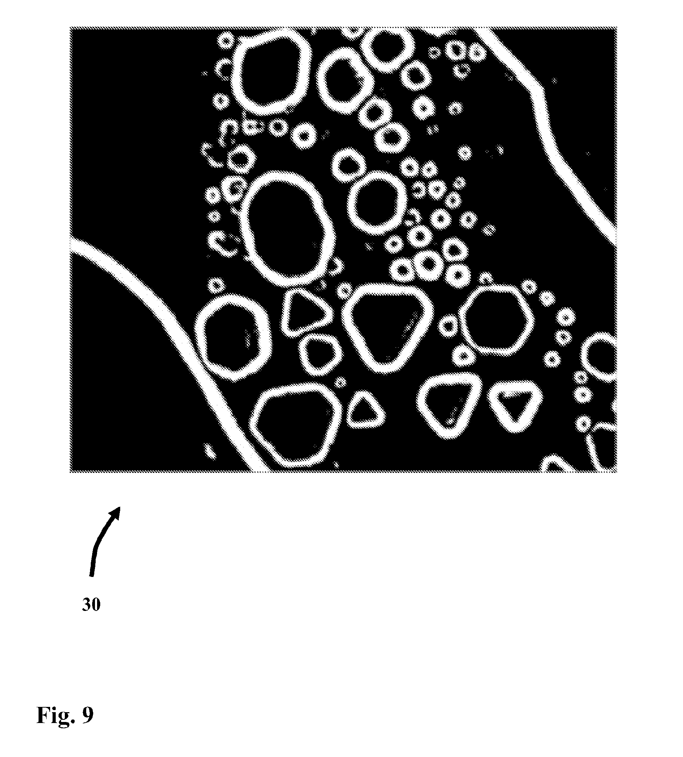

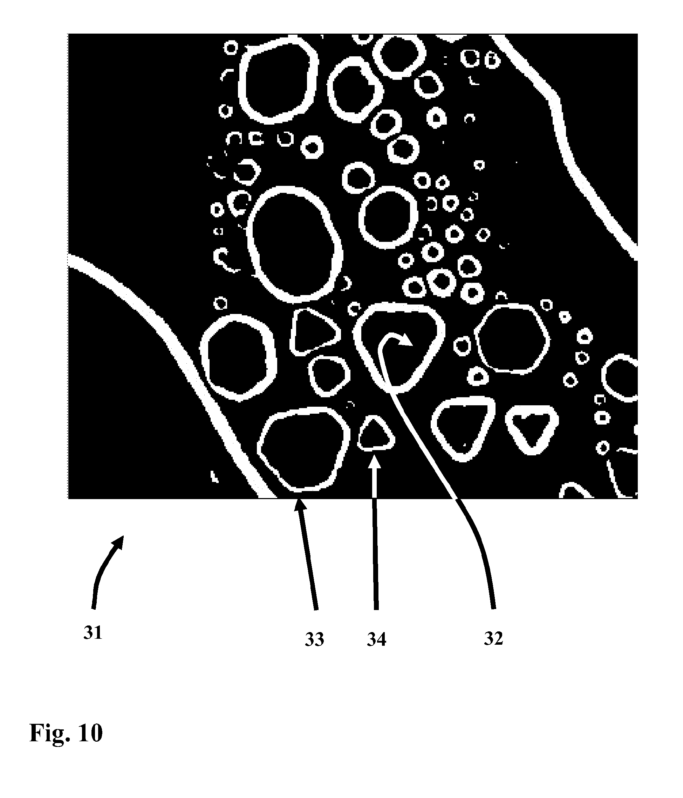

Falls in dem binären Kantenbild 25 noch Signale vorhanden sind, welche als Rauschen, siehe z.B. Bezugszeichen 29 in Fig. 8, gedeutet werden (Schritt S8), kann ein weiteres Glättungsverfahren durchgeführt werden (Schritt S9). Damit erhält man ein geglättetes binäres Kantenbild 30, siehe Fig. 9. Anschließend wird ein zweiter Schwellwert SW2 festgesetzt, zum Beispiel die Hälfte des maximalen Gradienten im binären Kantenbild 25, (Schritt S10). Bildpunkte mit einem Helligkeitsbetrag oberhalb des zweiten Schwellwertes werden auf logisch 1 gesetzt, und Bildpunkte mit einem Helligkeitsbetrag unterhalb des zweiten Schwellwertes SW2 werden auf logisch 0 gesetzt. Die auf logisch 1 gesetzten Kantenbildpunkte bilden dann Kantenzugbereiche, während die auf logisch 0 gesetzten Kantenbildpunkte einen Hintergrund bilden. Damit erhält man ein zusätzliches binäres Kantenbild 31 mit Kantenzugbereichen (Schritt S11), siehe Fig. 10. Das in Fig. 8 identifizierte Rauschen, siehe Bezugszeichen 29, ist nun in dem zusätzlichen binären Kantenbild 31 verringert oder nicht mehr vorhanden, siehe Bezugszeichen 32. Es wird darauf hingewiesen, dass die Schritte S9 bis S11 optional sind und entfallen können, wenn bei dem binären Kantenbild 25 gemäß Fig. 8 keine Rauschsignale identifiziert werden. Andererseits ist es selbstverständlich möglich, die Abfrage gemäß Schritt S8 automatisch mit "Ja" zu beantworten, so dass unabhängig von dem Ergebnis nach Schritt S7 stets ein Glättungsverfahren durchgeführt wird.

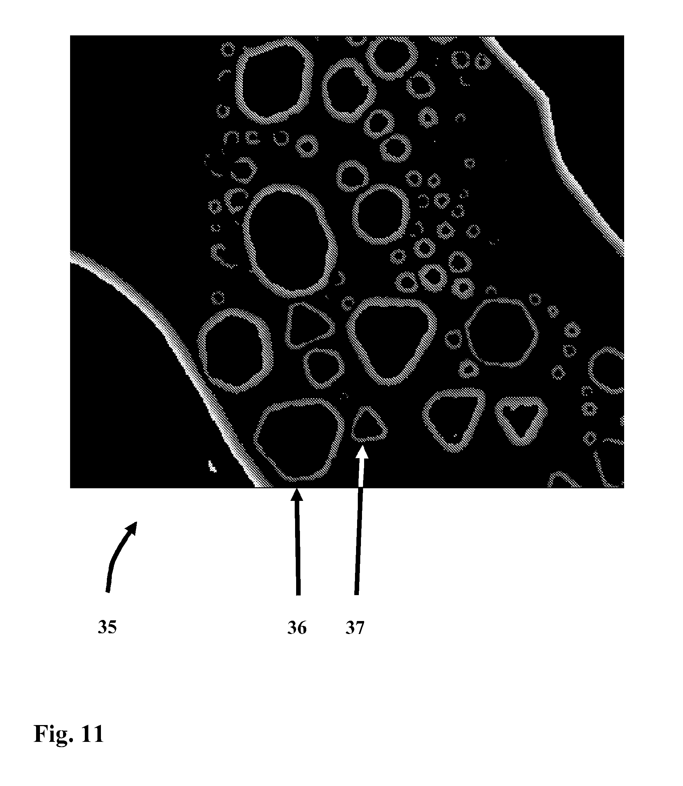

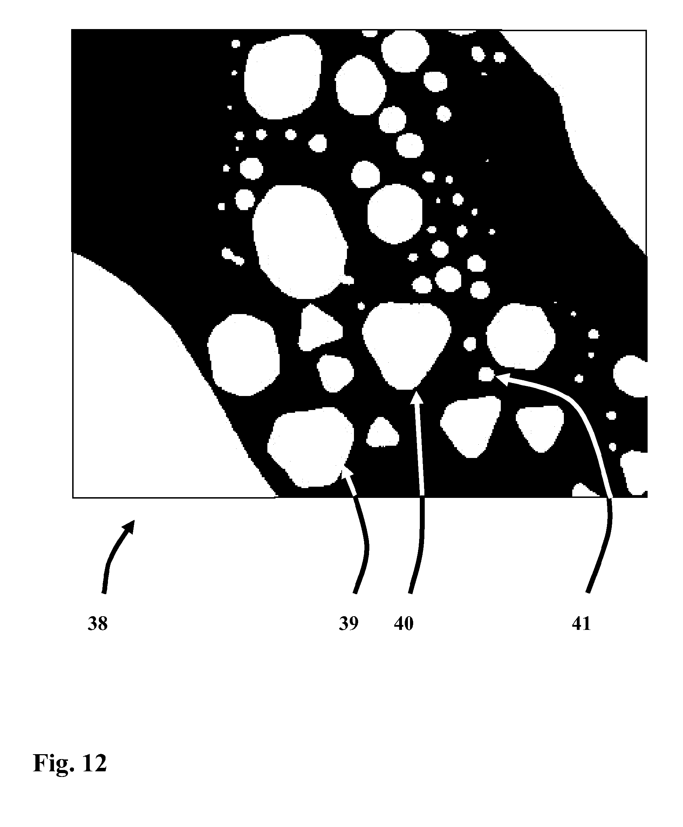

Anschließend werden das Grauwertbild 1 und das binäre Kantenbild 25 (oder das zusätzliche binäre Kantenbild 31) überlagert, Schritt S12. Fig. 11 zeigt ein solches überlagertes Bild 33, aus dem ersichtlich ist, dass die weiß dargestellten Kantenzugbereiche, siehe zum Beispiel Bezugszeichen 33, 34 in Fig. 10, mit Grauwerten des Grauwertbildes 1 aufgefüllt sind, siehe Bezugszeichen 36, 37. Daraufhin werden die Helligkeitsbeträge innerhalb jedes Kantenzugbereiches im gesamten Bild 35 ermittelt (Schritt S13), der Mittelwert aus allen so ermittelten Helligkeitsbeträgen berechnet (Schritt S14) und dieser Mittelwert als dritter Schwellwert SW3 gesetzt (Schritt S15). Daraufhin wird für jeden Bildpunkt im Grauwertbild 1 ein Vergleich zwischen seinem Helligkeitsbetrag und dem dritten Schwellwert vorgenommen (Schritt S16). Ist der Helligkeitsbetrag des jeweiligen Bildpunktes im Grauwertbild 1 größer als der dritte Schwellwert SW3, wird in einem neu aufzubauenden Bild 38 der jeweilige Grauwertbildpunkt auf logisch 1 (weiß) gesetzt (Schritt S17). Ist hingegen der Helligkeitsbetrag des jeweiligen Bildpunktes im Grauwertbild 1 kleiner als der dritte Schwellwert SW3, wird in dem Bild 38 der jeweilige Grauwertbildpunkt auf logisch 0 (schwarz) gesetzt (Schritt S18). Das Ergebnis ist ein binarisiertes Grauwertbild 38, siehe Fig. 12. Die im ursprünglich aufgenommenen Grauwertbild 1 für das menschliche Auge gut sichtbaren Objekte 2, 3 und 4 sind nach der Binarisierung als Objekte 39, 40 und 41 in dem Bild 38 sehr gut erkennbar. An Hand dieses Bildes 38 können nun zum Beispiel metrologische Untersuchungen vorgenommen werden oder eine Bildauflösung des Gerätes bestimmt werden, mit dem das digitale Grauwertbild 1 aufgenommen wurde.

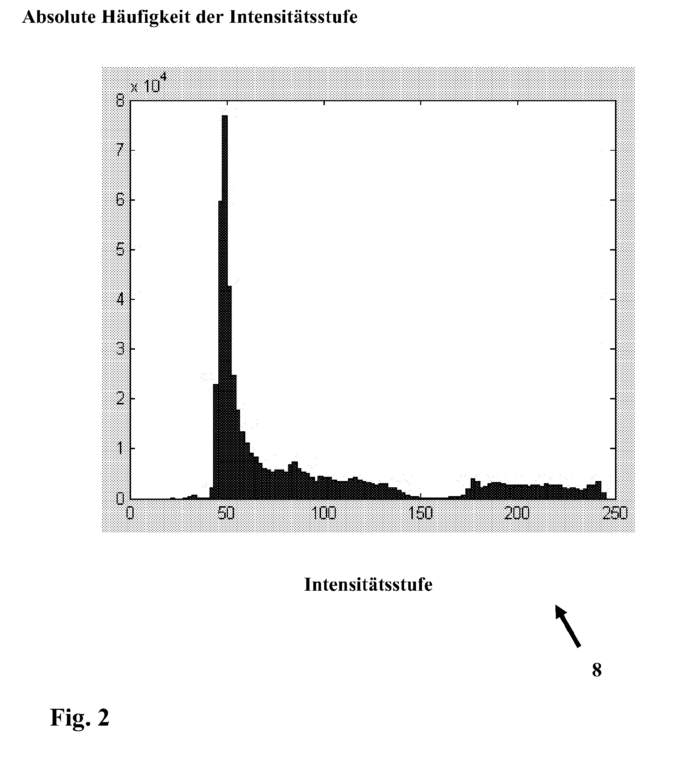

Die Qualität dieser erfindungsgemäßen Binarisierung des Grauwertbildes 1 ist durch Vergleich mit einem Bild deutlich erkennbar, welches mittels eines Histogramms auf herkömmliche Weise erzeugt wurde. Ein Histogramm stellt die Häufigkeitsverteilung von Grauwert-Intensitäten oder Helligkeiten der Bildpunkte eines Bildes grafisch dar. Das zum Grauwertbild 1 zugehörige Histogramm 8 ist in Fig. 2 dargestellt. Auf der x-Achse sind Helligkeitswerte bzw. Intensitätsstufen der Grauwerte von 0 (schwarz) bis 250 (weiß) aufgetragen, wobei auf der y-Achse die absolute Häufigkeit der jeweiligen Intensitätsstufe aufgetragen ist. Bei einem Grauwert von etwa 50 ist ein deutliches unteres Maximum zu erkennen, welches durch die dunklen Stellen 7 im Grauwertbild 1 bedingt ist. Ferner liegen Grauwerte mit der Intensitätsstufe von etwa 80 bis 150 und etwa 170 bis 240 vor. Ein deutliches oberes Maximum bei den helleren Grauwerten, welches sich von dem unteren Maximum deutlich abhebt, ist nicht zu erkennen.

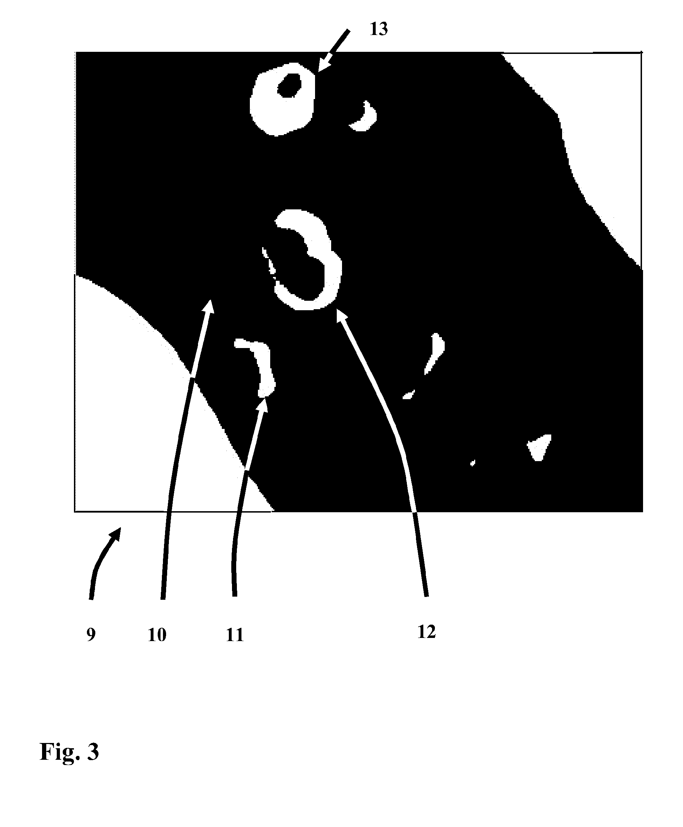

Üblicherweise wird der Schwellwert auf den Mittelwert zwischen einem unteren und einem oberen Maximum gesetzt. Wird angenommen, dass ein oberes Maximum der HäufigkeitsVerteilung der Grauwerte bei dem Histogramm in Fig. 2 etwa bei dem Wert 200 liegt, könnte daraus der Schwellwert als Mittelwert zwischen oberem und unterem Maximum berechnet werden. Dies würde bei den gewählten Zahlenwerten einen Schwellwert von (50+200)/2=125 ergeben. Das mit diesem Schwellwert berechnete binarisierte Bild 9 ist in Fig. 3 dargestellt. Die Bildpunkte mit einem Grauwert unterhalb von 125 sind in dem binarisierten Bild 9 auf logisch "0" gesetzt und erscheinen als schwarze Punkte, während die Bildpunkte mit Grauwert oberhalb von 125 auf logisch "1" gesetzt und als weiße Punkte dargestellt sind. Der Schwellwert von 125 führt in diesem Beispiel dazu, dass ein Großteil der Bildpunkte als schwarzer Punkt erscheint und kaum noch Objekte im binarisierten Bild 9 zu erkennen sind. Ein solches binarisiertes Bild repräsentiert das ursprüngliche Grauwertbild 1 sehr schlecht, da von den etwa 70 Objekten unterschiedlicher Größe im Grauwertbild 1 nur noch 8 Objekte (weiße Bereiche umgeben von schwarzen Punkten 10) identifizierbar sind. Zudem ist in dem binarisierten Bild 9 nur noch an zwei Objekten 12, 13 erkennbar, dass im Grauwertbild runde Objekte vorgelegen haben. Der mit dem üblichen Verfahren ermittelte Schwellwert von 125 auf der Basis einer Mittelwertbestimmung zwischen oberem und unterem Maximum eines Grauwert-Histogramms ist somit ein zu hoher Wert und führt zu einem unbrauchbaren Ergebnis.

Bei dem vorliegenden Beispiel des Grauwertbildes 1 wird mit dem erfindungsgemäßen Verfahren ein Schwellwert von 78 ermittelt, welcher weit von dem Wert 125 nach dem herkömmlichen Verfahren entfernt liegt. Das erfindungsgemäße Verfahren ist somit besonders gut bei einem Histogramm geeignet, welches nicht bimodal verläuft bzw. keine zwei klar voneinander getrennte Maxima aufweist.

## Patentansprüche

1. Verfahren zur Binarisierung eines digitalen Grauwertbildes, wobei von dem Grauwertbild ein binäres Kantenbild so erzeugt wird, dass im Grauwertbild vorhandene Kanten als Kantenzugbereiche ermittelt werden, und anschließend ein Mittelwert von Grauwerten des Grauwertbildes in allen Bereichen, welche den Kantenzugbereichen des binären Kantenbildes entsprechen, berechnet wird, wobei der Mittelwert einen Schwellwert für die Erzeugung eines binarisierten Grauwertbildes darstellt.

2. Verfahren nach Anspruch 1, wobei das binäre Kantenbild mittels eines auf Basis des Grauwertbildes erzeugten Gradientenbildes geschaffen wird, wobei für das Erzeugen des Gradientenbildes vorzugsweise ein Differenzenoperator zum Einsatz kommt, welcher aus der Gruppe ausgewählt ist, welche einen Sabel-Operator, Prewitt-Operator, Laplace-Operator, Kirsch-Operator und Roberts-Operator aufweist.

3. Verfahren nach Anspruch 2, wobei vor dem Erzeugen des Gradientenbildes das Grauwertbild einem Glättungsverfahren, insbesondere mittels eines Medianfilters, unterzogen wird.

4. Verfahren nach Anspruch 2 oder 3, wobei das Gradientenbild durch Verknüpfen eines ersten Richtungs-Gradientenbildes mit einem zweiten Richtungs-Gradientenbild erzeugt wird, wobei das erste Richtungs-Gradientenbild geschaffen wird, indem Gradienten im Grauwertbild in einer ersten Richtung ermittelt werden, und das zweite Richtungs-Gradientenbild geschaffen wird, indem Gradienten im Grauwertbild in einer zur ersten Richtung senkrechten Richtung ermittelt werden.

5. Verfahren nach einem der Ansprüche 2 bis 4, wobei dem Gradientenbild ein erster zusätzlicher Schwellwert zugeordnet wird, und wobei Gradientenbildpunkte mit einem Helligkeitsbetrag oberhalb des ersten zusätzlichen Schwellwertes auf logisch 1 gesetzt werden, und unterhalb des ersten zusätzlichen Schwellwertes auf logisch 0 gesetzt werden, so dass das binäre Kantenbild geschaffen wird, in welchem die auf logisch 1 gesetzten Gradientenbildpunkte Kantenzugbereiche bilden und die auf logisch 0 gesetzten Gradientenbildpunkte einen Hintergrund bilden.

6. Verfahren nach Anspruch 5, wobei der erste zusätzliche Schwellwert ein Viertel des maximalen Gradienten im Gradientenbild beträgt.

7. Verfahren nach einem der Ansprüche 5 oder 6, wobei das binäre Kantenbild einem Glättungsverfahren, insbesondere mittels eines Medianfilters, unterzogen wird und anschließend ein zweiter zusätzlicher Schwellwert festgesetzt wird, wobei Bildpunkte mit einem Helligkeitsbetrag oberhalb des zweiten zusätzlichen Schwellwertes auf logisch 1 gesetzt werden, und Bildpunkte mit einem Helligkeitsbetrag unterhalb des zweiten zusätzlichen Schwellwertes auf logisch 0 gesetzt werden, wobei die auf logisch 1 gesetzten Kantenbildpunkte Kantenzugbereiche bilden und die auf logisch 0 gesetzten Kantenbildpunkte einen Hintergrund bilden, um ein zusätzliches binäres Kantenbild zu erzeugen.

8. Verfahren nach Anspruch 7, wobei der zweite zusätzliche Schwellwert die Hälfte des maximalen Gradienten in dem Kantenbild beträgt, welches einem Glättungsverfahren unterzogen wurde.

9. Computerprogramm, das in einen Speicher eines digitalen Computers ladbar ist und einen Softwarecode zur Durchführung eines Verfahrens nach einem der Ansprüche 1 bis 8 aufweist, wenn das Programm auf dem Computer abläuft.

10. Computerprogramm, das in einen Speicher eines digitalen Computers ladbar ist und einen Softwarecode aufweist, der den Computer bei in den Speicher geladenem Computerprogramm in die Lage versetzt, ein Verfahren nach einem der Ansprüche 1 bis 8 durchzuführen.

11. Computersystem, welches ein Computerprogramm nach Anspruch 9 oder 10 aufweist.

12. Bildaufnahmevorrichtung mit einem Computersystem nach Anspruch 11.
